# EUROPEAN PATENT APPLICATION

(11) **EP 4 682 753 A1**
(43) Date of publication of application: **21.01.2026**
(21) Application number: 25186355.1
(22) Date of filing: 30.06.2025
(51) Int. Cl.: G06F 21/62, G06F 21/30, G06N 20/20, G06V 20/52

(54) **ELECTRONIC DEVICE, SYSTEM, AND RELATED METHODS FOR OBTAINING ENVIRONMENT INFORMATION**

(30) Priority: 19.07.2024 SE 2450818
(71) Applicant: Sony Group Corporation, Tokyo 108-0075 (JP)
(72) Inventor: AHLSE, Marc, Basingstoke, RG22 4SB (GB); WADMAN, Johan, Basinstoke, RG22 4SB (GB); ENGSTRÖM, Jimmy, Basingstoke, RG22 4SB (GB)
(74) Representative: Aera A/S

(57) **Abstract**

A method performed by an electronic device for obtaining environment information is disclosed. The method comprises obtaining sensor data from a sensor device, where the sensor data is indicative of an environment. The method comprises processing the sensor data by applying a machine learning model to the sensor data. The processing of the sensor data comprises providing a model output based on a set of parameters. Optionally, the set of parameters is configured to at least partially remove personally identifiable information. The method comprises outputting the model output. The model output is associated with time information and/or location information.

## Description

The present disclosure pertains to the field of Internet of Things (IoT), facility management, and electronic devices for obtaining environment information. The present disclosure relates to a method for obtaining environment information and related devices.

### BACKGROUND

Well-executed resource management can be helpful for corporate office and commercial settings. With employees working both in an office environment as well as remotely, often across multiple office locations or buildings, an accurate awareness of office room and desk usage may be challenging to obtain, either historically or in real-time. To further complexity matters, the essential nature of the maintenance of employee privacy and personal information in the workplace must be carefully considered.

### SUMMARY

Accordingly, there is a need for devices and methods for obtaining environment information, which may mitigate, alleviate or address the shortcomings existing and may provide accurate environmental information while addressing privacy risks.

A method, performed by an electronic device, for obtaining environment information is disclosed. The method comprises obtaining sensor data from a sensor device, where the sensor data is indicative of an environment. The method comprises processing the sensor data by applying a machine learning model to the sensor data. The processing of the sensor data comprises providing a model output based on a set of parameters. Optionally, the set of parameters is configured to at least partially remove personally identifiable information. The method comprises outputting the model output. Optionally, the model output is associated with time information and/or location information.

Further, an electronic device is provided. The electronic device comprises memory circuitry, processor circuitry, and an interface. The electronic device is configured to obtain, from a sensor device, sensor data indicative of an environment. The electronic device is configured to process the sensor data by applying a machine learning model to the sensor data. Optionally, the processing of the sensor data comprises providing a model output based on a set of parameters configured to at least partially remove personally identifiable information. The electronic device is configured to output the model output. Optionally, the output model is associated with time information and/or location information.

A system is disclosed. The system comprises an electronic device and a sensor device. The system is configured to obtain, from the sensor device, sensor data indicative of an environment. The system is configured to process the sensor data by applying a machine learning model to the sensor data. The processing of the sensor data comprises providing a model output based on a set of parameters configured to at least partially remove personally identifiable information. The system is configured to output the model output. Optionally, the model output is associated with time information and/or location information.

**It** is an advantage of the present disclosure that the disclosed electronic device allows for privacy-aware environmental data to be provided from raw sensor data. For example, environmental data may be provided which would otherwise be inaccessible due to privacy and/or security concerns. Advantageously, environment data, for example, room descriptions and/or room occupancy data, may be output by a machine learning model with various personal information removed dynamically, based on a context and user, for example, an office environment and a security personnel. In other words, relevant sensor data, such as camera data, may be accessed in a real-time or after-the-fact scenario in a manner that does not interfere with security concerns.

This may advantageously allow for improved reliability and robustness in an environment with sensor devices, for example in a monitoring and/or security system. In addition, the electronic device and related method(s) and system provide for a processing by a machine learning (ML) model at various points in a data processing flow. The flexibility of the removal of personally identifiable information (PII) via processing at a particular point in time and location advantageously provide for improved efficiency of each of the sensor device and electronic device, as well as for the system as a whole. For example, ML and other data processing (such as image processing), which can be very resource-heavy, may be offloaded to an external device, such as an edge device, or transferred from a sensor device, such as a camera, to an external device.

Further, in one or more examples, the system may advantageously allow for processing to be moved from an electronic device to a sensor device. Processing at the sensor device, such as a smart camera, may provide enhanced security for a system as a whole, by eliminating the need for a transmittal of the sensitive data, such as PII. Thus, providing for a system in which sensitive data is stored locally only and providing accessible environment data without compromising security. As used herein, the words "environment information" and "environment data" may be used interchangeably.

Moreover, it is an advantage of the present disclosure that the processing of sensor data may improve efficiency and reduce bandwidth requirements, as the image data is converted to textual data, which requires far less memory to store and processing power to process and transmit. In turn, this can conserve energy and battery life of any devices within the system, for example, the electronic device and/or the sensor device.

### BRIEF DESCRIPTION OF THE DRAWINGS

The above and other features and advantages of the present disclosure will become readily apparent to those skilled in the art by the following detailed description of examples thereof with reference to the attached drawings, in which:
Fig. 1 is a diagram illustrating an example system comprising an example electronic device, an example user device, and an example sensor device according to this disclosure,
Fig. 2 is a diagram illustrating an example configuration of system, such as an example system as disclosed herein,
Fig. 3, including Figs. 3A -3C is a flow-chart illustrating an example method, performed by an electronic device according to this disclosure,
Fig. 4 is a block diagram illustrating an example sensor device according to this disclosure, and
Fig. 5 is a block diagram illustrating an example electronic device according to this disclosure.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

As computer vision and artificial intelligence, AI, are becoming increasingly accepted in our daily lives, some may consider privacy issues to be increasingly relevant. For example, there may be concern of personal identifiable information (PII) being used for unintended purposes or becoming available to unauthorized persons or organizations. Currently, these privacy concerns may be addressed in formal or informal manners, including avoiding computer vision, limiting access to security-cleared personnel, avoiding storage of particular types of data, or restricting images collected through computer vision (for example, cameras or other sensors) to secure edge devices that are able to do only basic analysis like counting people. Using these approaches, there is a hope that PII will not be compromised or transmitted beyond a collecting device and/or system.

In one or more examples, PII may be seen as any representation of information that permits an identity of an individual to whom the information applies to be reasonably inferred either by direct or indirect means. In one or more examples, PII may include image data or visual descriptive data that could be used to identify the individual, a person's name, a person's email address and/or other contact information, a person's physical address, and/or any other information that could be used to identify an individual, according to the definition of PII.

This approach, however, often greatly restricts the capabilities of many of these technologies and therefore there is a need for richer data to be available to different stakeholders for many different purposes, while at the same time, managing the privacy risks for the individuals and the liability for the companies.

Facility management technology for use in management of office spaces like meeting rooms and desk areas exists. These products can facilitate management of office spaces from both an occupational and usage point of view. In some examples, this technology (for example, a software solution) may collect and provide statistics that help facility management make fact-based decisions about their offices. These statistics may also give employees of the company lie information about room and desk availability.

Increasingly, facility managers may require more and more relevant information about the various aspects of the facility at issue, for example, usage time of a particular resource or set of resources (such as a conference room or a set of rooms in a building, or office equipment such as desks, projectors or other office equipment). In one or more examples, a facility manager may wish for information regarding cleaning and a need for cleaning services. There could be many other facilities-management related reasons why improved statistical support, in real-time or after-the-fact may be helpful for a facility or facilities services.

Common sensors for meeting rooms and other spaces may be used. These simple sensors can be, for example, passive infrared (PIR) sensors. In a simple form, a PIR can only detect if someone is in the room or not and therefore not be able to provide much additional information about the environment. These types of sensors are therefore very limited in functionality and flexibility due to the limited information they can collect and therefore detect. In some cases, cameras may be considered helpful and used, as they have greater potential for helpful data collection. However, cameras may introduce difficulties as they require some interpretation and extraction of the image content. They may also introduce unwanted privacy concerns and/or violate employee integrity, which can present a problem for both employees and employers.

It may therefore be helpful to convert camera images to a rich text description of the frames and store this information in a database, together with other relevant information such as time and place information. This may provide a way for relevant and appropriate persons (such as employees or facilities management) to capture statistical opportunities (such as the occupancy rate of a particular area of an office building) and/or access real-time environment information (such as the availability of particular workspaces and/or equipment) while preserving integrity and reducing privacy risks.

In one or more examples, a method is disclosed that can use image data (for example, video data), to obtain environment information while both preserving privacy and enabling rich information extraction for statistics and analytics. In one or more examples, this would allow for access to relevant (for example, statistical information or real-time availability information), without exposing actual images to any users. In one or more examples, the method may be used in a product as part of an office and/or laboratory environment where it could be a tool for facility management.

In one or more examples, the system could be configured based on engineering capabilities, focus on the intended use cases, relevant business areas and the specific environment. More details regarding the specific configurations may be discussed herein. In one or more examples, rich and relevant information could be extracted and stored in a database together with time and place information. In one or more examples, this data could be searched via an open question or open question set (for example, a user input) to gather information. In one or more examples, the information needed from the system may be gathered without an awareness of the intended purpose and/or the system may be set up in advance of a certainty of the purpose of the information, for example, the environment information.

In one or more examples, environment information may be seen as information pertaining to a particular environment, for example an environment in a field of view of a sensor device (such as a camera). In one or more examples, environment data may include various levels of PII, including no PII, for example, in an office setting, the environment data may include a detailed textual description of a person, including identifying features, clothing, etc. In one or more examples, the environment data may include a description of an image of a person with only generalized descriptive details. In one or more examples, the environment data may comprise room descriptor information, including (continuing with the office space example), a description of the room itself (for example, the room is approximately 5 x 7 meters with white walls and hardwood flooring), a description of the contents of the room (for examples, the room has a large table, three black laptops of a particular brand, a plant in the north corner and a blue bag sitting on the tabletop). The environment information may also contain information about other aspects of the room such as the status of various doors and windows (for example, the west door is closed and three of the five windows on the north wall are halfway open). In one or more examples, the environment information may also contain information about the occupancy of the room, for example, there are currently 4 persons in the room. In one or more examples, the environment information may contain further details about the persons in the room, according to provided parameters, as discussed herein, including positioning information about the persons and/or contents (for example, 3 persons are sitting on chairs and 2 are standing, the person on the west side is looking out the window and each of the three seated persons are looking at a shared screen, one of the standing persons is speaking), to more detailed information about the persons (one person is wearing a black suit and two are wearing shorts).

In one or more examples, the method, device and system disclosed herein may be configurable based on the preferences of a particular user or set of users. For example, the method, as described herein, may provide for output of environmental information. In some cases, the system may be configured to allow for a particular image or images collected by the sensor device(s), for example, by a camera, to be retrievable. In one or more examples, the retrievability (such as, the access to the sensor data, for example, access to an image captured by the camera) could be restricted to various levels, including, for example, access by authorized personnel only, or access by legal (for example, discovery) order only. In one or more examples, various levels of retrievability of the sensor data (such as image data) may be configurable by the system, by the electronic device and/or by the sensor device. In one or more examples, the sensor data could be stored in a manner that removes a specified level of PII, for example, all or some images could be stored with faces or other relevant aspects blurred to reduce the privacy risks. In one or more examples, the sensor data could be stored only in particular situations, where the situations may be predetermined or determined in real-time. In one or more examples, the sensor data (for example, image data) may be stored only when there has been a safety or security incident impacting the particular location, such as a fire, a burglary, or another type of incident. In one or more cases, the saved sensor data may searchable via the text generated for the sensor data, for example, rather than searching through a series of images, the images could be searched only via a textual description of each image, thus reducing the PII disclosure risk, while still providing access to a more robust information in specific instances (for example, in a safety or security incident). In one or more examples, sensor data, such as image data, may be stored for and/or accessed only for particular locations within the environment. For example, the system may be configured to provide for sensor data storage and/or sensor data access only for a particular room or set of rooms or for a particular time or set of times. In one or more examples, the system may be configured to store and/or provide access to sensor data only for a particular location (such as a storage room) during a particular time (such as only after usual business hours, or only between 10:00pm and 5:00am).

In one or more examples, the method may use machine learning to perform the processing of the sensor data. In one or more examples, artificial intelligence, such as the use of large language models (LLMs) may be utilized to provide for multimodal understanding. An application of these models may provide for improved machine understanding of sensor data, such as image data and/or audio data as well as a conversion of aforementioned understanding of images or audio to text.

The figures are schematic and simplified for clarity, and they merely show details which aid understanding the disclosure, while other details have been left out. Throughout, the same reference numerals are used for identical or corresponding parts.

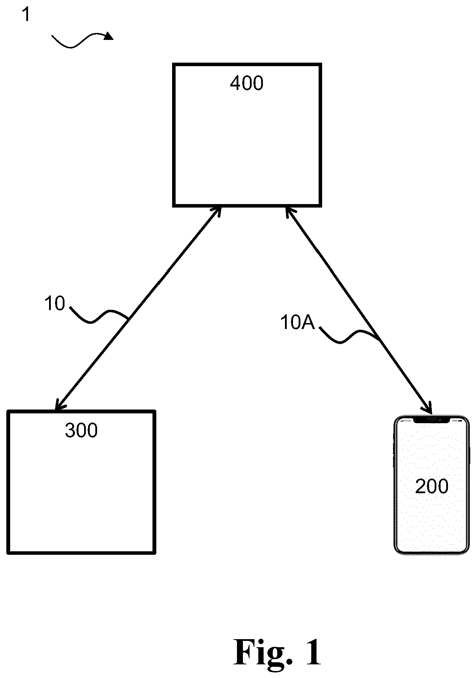

Fig. 1 is a diagram illustrating an example system 1 comprising an example electronic device 400 and an example sensor device 300 according to this disclosure. The system 1 may be seen as an example system as disclosed herein.

As discussed in detail herein, the present disclosure relates to system 1 for obtaining environment information. The wireless communication system 1 comprises a sensor device 300 and/or an electronic device 400. The user device 200 may be configured to communicate with the electronic device 400 via a wired and/or wireless link 10A.

In one or more examples, the electronic device 400 may include the sensor device 300, with the communication 10 being a communication within the electronic device 400 itself. In one or more examples, sensor device 300 may be a component of electronic device 400 and the electronic device 400 may be communicatively coupled with one or more additional, external sensor devices and or electronic devices (not pictured).

In one or more examples, the electronic device 400 and/or the system 1 obtains sensor data indicative of an environment, from the sensor device 300. For example, the electronic device 400 may receive, from the sensor device 300, image data, including an image of an office space with one or more persons in the office.

In one or more examples, the electronic device 400 and/or the system 1 may process the sensor data by applying a machine learning model to the sensor data. In one or more examples, the processing of the sensor data by the electronic device 400 and/or the system 1 comprises providing a model output based on a set of parameters configured to at least partially remove personally identifiable information. For example, as described herein, the processing may comprise removing some or all of the PII. In one or more examples, the processing may remove only an initial layer or small amount of PII, with additional PII removed at a later point, before access of the data in a controlled manner, before outputting a response, and/or when outputting a response, as described herein. In one or more examples, the machine learning model may be pretrained according to a set of preferences for a given company or environment where the present disclosure is to operate. For example, the machine learning model may be pretrained according to wishes of a system administrator or in another way. In one or more examples, the machine learning model may be trained in real-time based on sensor data received from the system 1.

In one or more examples, the electronic device 400 and/or the system 1 may output the model output (for example, the processed sensor data). In one or more examples, the model output is associated with time information (for example, the time at which the data was captured) and/or location information (for example, the location within the building or facility at which the data was captured, and/or the sensor name/label at which the data was captured, and/or the geographical coordinates at which the data was captured, and/or another relevant location data associated with the sensor data). In one or more examples, time information and/or location information may be information associated with another event, such as: the time and/or location at which the electronic device obtained the data, the time and/or location at which the electronic device output the data, the time and/or location at which a user input was obtained to access a response, a time and/or location at which a user response was provided and/or received, and/or time and/or location information for another relevant event.

In one or more examples, before, after or during, as described herein, the electronic device 400 may receive, from a user device, for example, user device 200, a user input, for example, a first user input. In one or more examples, the first user input may be a command. In one or more examples, the command may be in the form of a query, for example, "How many persons are in room B?" or a directive "Find occasions where a person wearing a pink jacket on the back is sitting by a desk". In response, the electronic device 400 may provide, for example, may generate, or may derive, a response to the user input (in other words, a user input response), based on the model output. In one or more example embodiments, the model output may be the response to the user input. In one or more examples, the electronic device 400 may, in response to the receiving the first user input, at least partially remove the PII. In this way, a variable amount of PII, including no PII, may be provided based on factors relative to the user input, such as an identity of the user device from which the user input was received (and/or a registered owner of the user device), a type of user input received (for example, a general request, a specific request, an urgent request, or another type of input), a security level clearance of the user device, and/or another relevant factor that could serve as a determinant in the appropriate level of PII to include in the response.

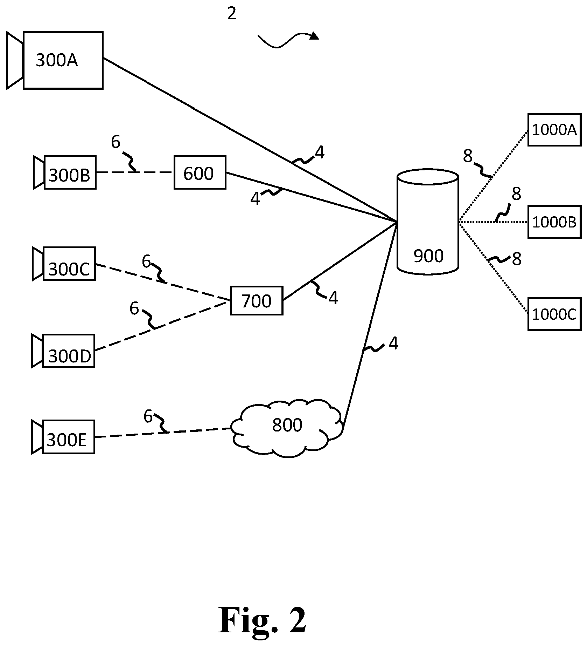

Fig. 2 is a diagram illustrating an example configuration of system 2, such as an example system as disclosed herein. System 2 may comprise one or more sensor devices 300 (300A, 300B, 300C, 300D, 300E), one or more edge devices 600, one or more local servers 700, one or more cloud servers 800, and one or more remote database/servers 900. System 2 may also comprise one or more analysis tools 1000A, 1000B, and 1000C. In one or more examples, system 2 may depict a variety of deployment options for the method, system, and electronic device disclosed herein. In Fig. 2, it may be appreciated that the electronic device as disclosed herein, such as the electronic device 400 of Fig. 1, may be implemented in one or more of: the sensor device 300A, the edge device 600, the local server 700, the cloud server 800, the remote server 900, and the analyses tools 1000A-1000C depending on the implementation.

In one or more examples, machine learning models, such as LLM usage (for example, training and/or deployment), may be costly from a time and/or resource perspective. For this and other reasons, it may be helpful to have a variety of implementation options available.

In one or more examples, the method comprises processing the sensor data by applying an artificial intelligence, AI, model to the sensor data. As used herein, the terms "machine learning model" and "AI model" may be used interchangeably.

In one or more examples, a sensor device 300A may be camera. In one or more examples, the sensor device 300A may be a smart camera 300A.

In one or more examples, a smart camera may be seen as a machine vision system, which in addition to image and optionally audio capture circuitry, is capable of extracting application-specific information from the captured images, along with generating event descriptions or making decisions that may be used in an intelligent and/or automated system.

In one or more examples, the smart camera 300A may have a high level of security as well as compute capabilities. In one or more examples, the smart camera 300A may serve as the electronic device described in the method as disclosed herein, and may, for example, obtain the sensor data indicative of the environment, operate according to the (trained or untrained) machine learning model, process the sensor data, and output the model output.

In one or more examples, the sensor data (for example, image) processing may occur on an internal processor of the smart camera 300A and therefore the image data may not leave the camera. In one or more examples, having the image data stored locally only may provide a security benefit, as the image itself may never need to leave the local device (for example, the smart camera 300A). In one or more examples, following the local processing of the image data, the smart camera 300A transmits 4 to a remote database/server 900 processed data (such as the model output as disclosed herein). The processed data may for example comprise text data, wherein the text data is describing the sensor data. The data flow 4 is depicted between the smart camera 300A and the remote database/server 900. In one or more examples, remote database/server 900 comprises a databased, such as textual database, which contains, *inter alia*, processed data from the smart camera 300A, such as comprising descriptions of images, time data, location data, and other relevant data to be used by this or another system.

In one or more examples, edge device 600 may receive sensor data, such as image data, from a sensor device 300B.

An edge device may be seen as an electronic device that may serve as a device to collect and/or communicate information. In other words, it may serve as an interface between two devices and/or systems. In one or more examples, and edge device, for example, edge device 600, may serve as a device that assists with the processing of the sensor data, such as image to text conversion. An edge device may be seen as a device having processing capabilities being remote from the sensor device but in communication with the sensor device. In one or more example embodiments, the edge device may be configured to operate according to the machine learning model as disclosed herein.

In one or more examples, a sensor device 300B may be a camera 300B; the camera 300B may transmit to the edge device 600 sensor data (for example, raw sensor data and/or image data).

To accommodate for capacity and capability limitations of the camera 300B, processing of the sensor data, including, for example, conversion from image to text data, may occur at the edge device 600. The transmission 6 of data from the camera 300B to the edge device 600 is depicted in Fig. 2 as the dashed line. The transmission 6 of data may be seen as an image data flow.

In one or more examples, the edge device 600 may then transmit the processed data (for example, as text data) to a remote database/server 900. The transmission 4 of edge device data from the edge device 600 to the remote database 900 is depicted as the solid line connecting edge device 600 and remote database/server 900. The edge device data may be seen as a text flow.

In one or more examples, sensor devices 300C and 300D may be a plain or usual camera (in other words, a non-smart camera with limited processing capabilities). In one or more examples, the camera 300C and/or 300D may capture image and optionally audio data from disparate locations in an office environment. In one or more examples, each of cameras 300C and 300D may transmit to a local server 700, sensor data such as image data. In one or more examples, data processing, including conversion from image to text data may occur at the local server 700. This flow of sensor data, such as image data (in other words, image flow 6) is depicted at the dashed line between 300C/300D and local server 700. Once processed, the processed data (such as local server data), e.g., including at least a conversion from image data to text data, may be sent to the remote database/sever 900. In one or more examples, the remote database/server 900 may access the data from the local server 700 in response to one or more prompts, including, for example, a request from the electronic device, for example, electronic device 400 of Fig. 1. The transmission 4 from local server 700 to remote database/server 900, such as local server data, e.g., text data flow, is depicted herein. In one or more examples, the use of a plurality of cameras (for examples cameras 300C and 300D), sending sensor data directly to a local server for processing, such as image to text conversion, may improve reliability. In one or more examples, the local server (or for example, any intermediate device capable of data processing), may merge the data and therefore the "understanding" from several overlapping camera images. In one or more examples, the machine learning model (for example, an LLM), could reside in the cloud and/or on a local or remote server and/or on both, with an update from the cloud to the local server occurring at a specified interval or upon accessing the model, or according to another update schedule. In one or more examples, the cloud-based, local or remotely hosted machine learning model could be fed multiple and/or overlapping sensor data, such as image data, from the sensor device(s) to merge the sensor data, such as image data, and generate better (for example, more robust and/or more accurate) model output, such as textual data, to describe the sensor data, such as image data. In one or more examples, hosting a machine learning model locally, but updating via a cloud-based model may help to address security, privacy and/or control concerns.

In one or more examples, the sensor device 300E may be a plain (non-smart) camera 300E. In one or more examples, the data processing for provision of the model output, such as the conversion of the image to text data may occur at a server in the cloud (in other words cloud server 800). In one or more examples, the plain camera 300E will send sensor data (in other words sensor data flow 6, depicted at the dashed line) to a cloud-based server 800 for processing to the model output, e.g., conversion from image to text. In one or more examples, further processing may occur at the cloud-based server 800, including the partial or complete removal of PII. In one or more examples, the cloud-based server 8000 will send the processed data to a remote database/server 900. The data flow between the cloud-based server 800 to the remote database/server 900 is depicted at solid line 4.

In one or more examples, the camera 300B may be a semi-smart camera. In one or more examples, a semi-smart camera may be seen as a smart camera (such as, smart camera 300A) with limited capabilities. For example, while a smart camera can manage all processing for provision of the model output on an internal processor, a semi-smart camera may be capable of performing some limited or rudimentary data processing tasks, for example, the semi-smart camera may be able to identify (for example, count) a number of persons in a frame or in a room. In one or more examples, when the sensor device is a semi-smart camera, for example, in the case of camera 300B, some processing may occur on camera while the image and/or text data may be sent to an external device (described herein, for example, the edge device 600, a local, cloud or remote server 600, 700, or 800, respectively, or another server).

In one or more examples, analysis tool 1000A, analysis tool 1000B, and analysis tool 1000C are communicatively coupled to remote database/server 900. In one or more examples, the model outputs, such as text descriptions, for example text descriptions stored in remote database/server 900, may be analyzed by one or more of analysis tools, 1000A-C, respectively, and by different users according to an end-user's preferences. In one or more examples, the analyzing could be carried out in real-time or as a post-processing activity. For example, analysis tool 1000A could be used to analyze textual data based on a received user input query requesting all instances of "five persons in a room". The analysis tool 1000A could access all available data in remote database/server 900 and analyze the text for all descriptions of an image containing five persons in a room. The analyzer tool 1000A could access this information via a query/result flow between the analyzer tool 1000A and the remote database/server 900, as depicted at line 8. In parallel or series, another tool, analyzer tool 1000B may receive a query requesting information regarding "coffee cups in an empty room", for example, as a request from a facilities management service for an assessment by a cleaning service need. In one or more examples, analyzer tool 1000B may query the remote database/server 900 for all textual data related to coffee cups in an empty room. The analyzer tool 1000B could access this information via a query/result flow between the analyzer tool 1000B and the remote database/server 900, as depicted at line 8.

In one or more examples, in parallel or independently, analyzer tool 1000C may receive a query "bicycle on highway". In one or more examples, the analysis tool 1000C may access the database/server 900 to identify information relevant to any and all textual descriptions of image data related to a bicycle on a highway. The analyzer tool 1000C could access this information via a query/result flow between the analyzer tool 1000C and the remote database/server 900, as depicted at line 8.

In one or more examples, any one of analysis tools 1000A-C, may be utilized to provide information from the converted text data in response to written queries.

In one or more examples, if an end-user has forgotten a laptop, a query could be submitted to the model (for example, the large language model) which can provide a response based on an analysis of the model output, such as text descriptions of the images captured by the sensors, for examples sensors 300A-E.

In one or more examples, the response can be provided in real-time, for example, as an additional safety feature, in the case of an emergency. For example, a pre-determined or real-time query could be posed regarding identifying "smoke in a room" and/or "a person collapsing". An analyzer tool such as analyzer tool 1000A could be used to monitor for this type of query and provide a response in real-time.

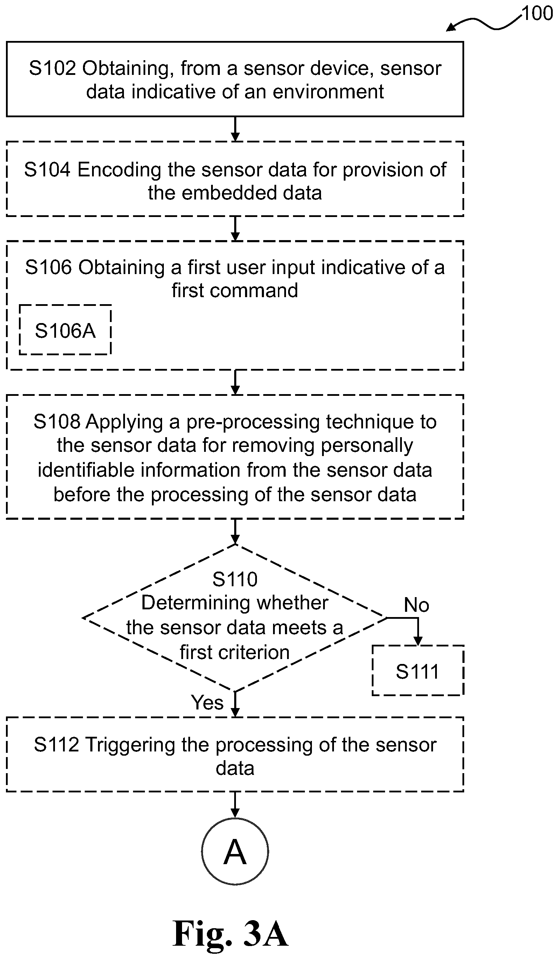

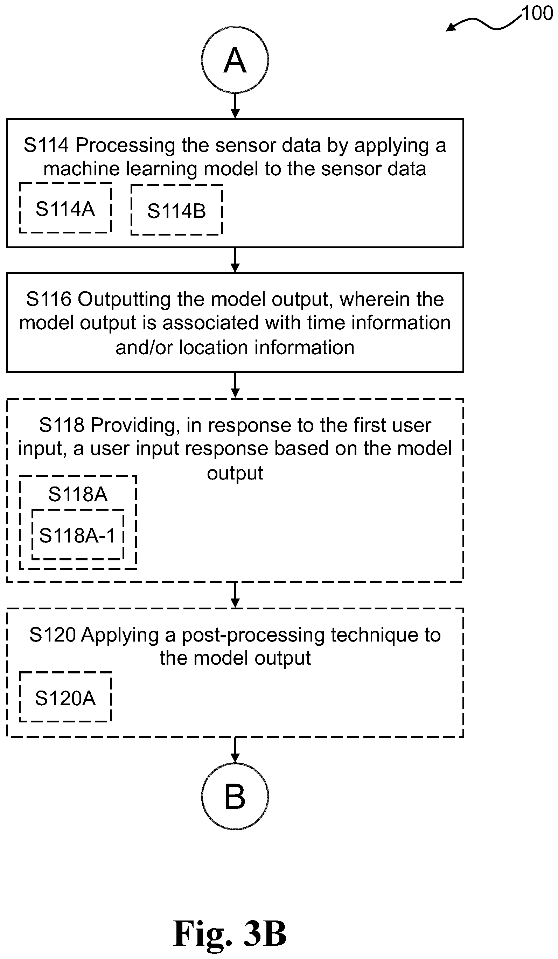

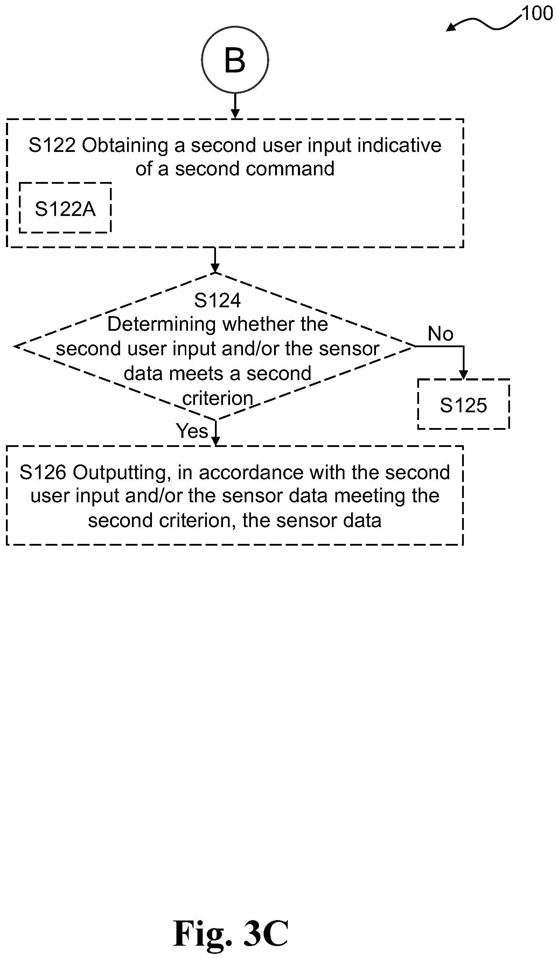

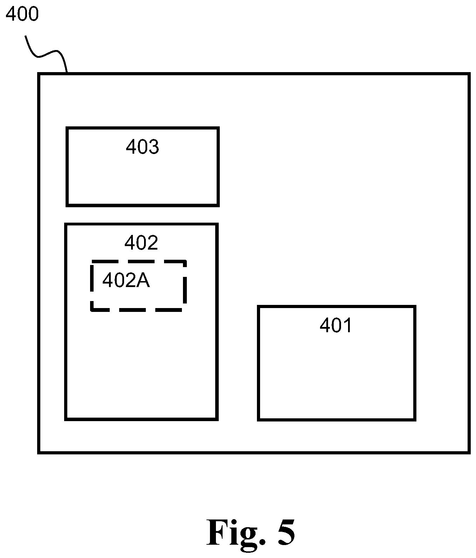

Figs. 3A-3C show a flow diagram of an example method 100, performed by an electronic device according to the disclosure, for obtaining environment information. In other words, the method 100 may be for providing a model output indicative of environment information where PII has been filtered out. The electronic device may be the electronic device disclosed herein, such as electronic device 400 of Fig. 1 and Fig. 5, the sensor device 300, 300A-E, of Fig. 1 and Fig. 2, respectively. The method 100 may be seen as a method performed by an electronic device for obtaining environment information as disclosed herein.

In one or more examples, an electronic device may be seen as a sensor device, a server device, a user device, or another suitable device. In one or more examples, the electronic device may be a sensor device including, for example, the sensor device disclosed herein for providing sensor data, such as a camera or other sensor device. In one or more examples, the electronic device may be a server device, such as the server device disclosed herein. In one or more examples, the electronic device may be a user device such as a smart phone, a tablet, a wearable, or other suitable user device.

The method comprises obtaining S102 sensor data from a sensor device, where the sensor data is indicative of an environment.

In one or more examples, a sensor device may be seen as a device comprising one or more sensors, such as a visual sensor, a motion sensor, a proximity sensor, an audio sensor, a pressure sensor, or another suitable sensor. In one or more examples, a plurality of sensor devices may be used, for examples, to collect sensor data. In one or more examples, the sensor device may be a camera, including, for example, a smart camera. In one or more examples, a smart camera is a camera in which some or all of the data processing can occur on an onboard, for example, via an internal processor. In one or more examples, the sensor device may be a semi-smart camera. In one or more examples, a semi-smart camera may be seen as a smart camera with limited capabilities, as described herein.

In one or more examples, the sensor device is a camera configured to obtain sensor data indicative of the environment.

In one or more examples, a camera may be seen as a sensor device configured to capture data, including but not limited to, visual image and/or audio data.

In one or more examples, sensor data may be seen as data associated with a sensor, such as a sensor of a sensor device. In one or more examples, sensor data may be seen as data received from or transmitted by a sensor and/or sensor data may be obtained from the sensor and/or collected by the sensor. In one or more examples, sensor data may comprise image data, for example, data obtained using a camera. In one or more examples, sensor data may comprise motion data indicative of motion, for example, data obtained using a motion sensor. In one or more examples, the sensor data may be indicative of the environment and may or may not comprise any PII. In one or more examples, the sensor data comprises image data, video data, and/or motion data.

In one or more examples, the method comprises encoding S104 the sensor data for provision of the embedded data. In one or more examples, the embedded data may be an intermediate format of data, for example, comprising one or more embeddings as described herein.

In one or more examples, encoding the sensor data may be seen as converting the sensor data to another format, such as encrypting the sensor data.

In one or more examples, the method comprises obtaining S106 a first user input indicative of a first command.

In one or more examples, a first user input indicative of a first command may be seen as an input received by the electronic device. In one or more examples, the first command may be seen as a line of text input that includes either a query (for example, a question like "How many persons are in room B?") or a directive (for example, a statement like "Find instances where a person is writing at a white board.").

The first user input may for example comprise a first command, such as a first request for the electronic device to perform an operation. For example, the first user input may be seen as comprising a first command for the electronic device to provide (S118), in response to the first user input, a user input response based on the model output.

In one or more examples, the first user input may be obtained by the system at any point in the process before a response is provided, for example, the first user input may be provided before or after sensor data has been obtained from the electronic device. In one or more examples, a first user input may be obtained before or after the processing of the sensor data by applying a machine learning model. In one or more examples, the first user input may be obtained before or after the outputting the model output. For example, the user input may be posed as a query for real-time access to processed sensor data. In one or more examples, the user input may be posed as a query for real-time access, which triggers the electronic device to obtain the sensor data. In one or more examples, the user input may be posed as a query for access to previously processed and stored data.

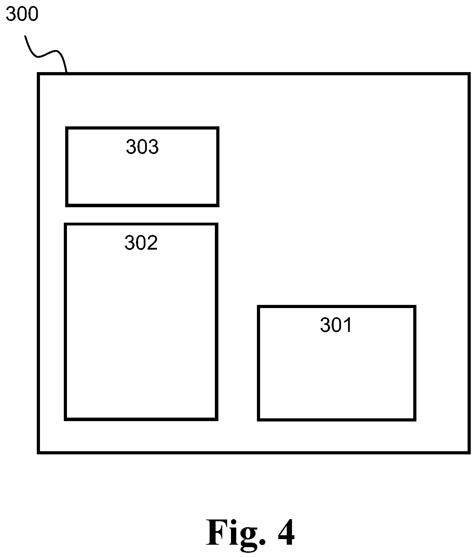

In one or more examples, the method comprises obtaining S106A the first user input and/or obtaining S122A second user input from a user device. In one or more examples, a user device may be seen as an electronic device. In one or more examples, the user device may be, for example user device 200, of Fig. 1 and Fig. 4. In one or more examples, the user device may be a smart phone, tablet, or other user electronic device.

In one or more examples, the method comprises applying S108 a pre-processing technique to the sensor data for removing personally identifiable information from the sensor data before the processing of the sensor data.

In one or more examples, a pre-processing technique may be seen as a data processing technique applied to the sensor data to remove PII. For example, in the case of using camera (for example, a semi-smart camera as described herein), some or all PII may be removed in advance of transmitting the image data to another device (for example, the electronic device, and/or an edge electronic device). In one or more examples, retaining some or all PII locally (and not transmitting it) may be used to reduce security or other risks. For example, a camera or other device may apply a face blurring to any images of persons visible in the sensor data (such as, image data) before the electronic device processes the sensor data by applying the machine learning model. In one or more examples, the pre-processing may occur at the electronic device, at the sensor device, at an edge device, or at another location.

In one or more examples, the method 100 comprises determining S110 whether the sensor data meets a first criterion. In one or more examples, a first criterion may be seen as one or more factors or parameters to be met, such as a change in an image (for example, over a particular threshold of change, for example, indicative of a change in the environment), a movement in the image, or another criterion. In other words, the first criterion may comprise one or more conditions to be satisfied for triggering the obtaining and/or the processing of the sensor data at the electronic device. For example, the first criterion may comprise one or more thresholds for triggering the obtaining and/or the processing of the sensor data.

In one or more examples, the sensor data (for example, image data) may be stored only when there has been a safety or security incident impacting the particular location, such as a fire, a burglary, or another type of incident defined by the first criterion. In one or more cases, the saved sensor data may searchable via the text generated for the sensor data, for example, rather than searching through a series of images, the images could be searched only via a textual description of each image, thus reducing the PII disclosure risk, while still providing access to a more robust information in specific instances (for example, in a safety or security incident). In one or more examples, sensor data, such as image data, may be stored for and/or accessed only for particular locations within the environment. For example, the system may be configured to provide for sensor data storage and/or sensor data access only for a particular room or set of rooms or for a particular time or set of times. In one or more examples, the system may be configured to store and/or provide access to sensor data only for a particular location (such as a storage room) during a particular time (such as only after usual business hours, or only between 10:00pm and 5:00am).

In one or more examples, the method 100 comprises, in response to determining that the sensor data does not meet the first criterion, refraining S111 from triggering the processing of the sensor data. In one or more examples, if the sensor data fails to meet a first criterion, the processing of the sensor data will not be triggered.

In one or more examples, the method 100 comprises triggering S112 the processing of the sensor data. In one or more examples, the triggering the processing of the sensor data is in accordance with the sensor data meeting the first criterion. Conditioning the processing of the sensor data may allow to save processing power and/or energy at the electronic device. In one or more examples, the processing of the sensor data may occur at an edge device to improve the functionality and reliability of the system. In one or more examples, any of the devices in the system could detect, for example, using a first criterion, if the sensor data, such as an image, should be analyzed. This determination could be based on a movement, a similarity or difference to a previous image, or according to another criterion or set of criteria.

The method 100 comprises processing S114 the sensor data by applying a machine learning model to the sensor data.

In one or more examples, a machine learning model as referred to herein may be seen as a model and/or a scheme and/or a mechanism and/or a method configured to provide, based on sensor data and/or a previous model, a model output, e.g., comprising environment information where PII has been at least partially removed. The machine learning mode may comprise a model architecture which may be based on a neural network, such as comprising one or more different type of layers and/or number of layers. A model architecture may be seen as configuration of a model, such as comprising one or more parameters of a model. For example, a model architecture may comprise a configuration indicating one or more of: a type of model, a size of model, connections between neurons, an input of a model, and an output of a model. A model architecture may comprise a neural network comprising one or more of a feed forward neural network, a long short-term memory network, LSTM, and a convolutional neural network, CNN. Example of models include operational model for one or more electronic devices (such as a sensor data processing model, a model for providing model output based on a set of parameters for at least partially removing PII, a model for at least partially removing personally identifiable information). The ML model may be seen as configured to predict environment information or data based on the sensor data and in turn configured to at least partially remove PII from the predicted environment information.

To "at least partially remove" as disclosed herein may be seen as "to remove one or more parts of (such as less than all or all)" or "to remove in its entirety". For example, processing of the sensor data comprises providing a model output based on a set of parameters configured to remove one or more parts of PII, or processing of the sensor data comprises providing a model output based on a set of parameters configured to remove PII in its entirety, such as to remove all PII associated with the sensor data.

In one or more example electronic devices, the ML models, comprise model layers including an input layer, one or more intermediate layers, and an output layer for processing of the data, such as the sensor data. In other words, the input layer, the one or more intermediate layers, and/or the output layer may be seen as layers of the ML models, such as the first model and the second model, such as layers of the first neural network. The one or more intermediate layers may be considered as hidden layers (such as hidden features). The one or more intermediate layers may include a first intermediate layer. A model as referred to herein (such as the first model and the second model) may be seen as a model and/or a scheme and/or a mechanism and/or a method configured to process, such as based on one or more processing schemes and/or a previous model, the sensor data.

In one or more example electronic devices, a model as referred to herein may be stored on a non-transitory storage medium (for example, on the memory of the electronic device). The model may be stored on a non-transitory storage medium of the electronic device being configured to execute the model. In one or more example electronic devices, the model may comprise model data and or computer readable instructions. The model data and/or the computer readable instructions may be used by the electronic device. The model (such as model data and/or the computer readable instructions) may be used by the electronic device to process the sensor data, such as camera data like image or audio data.

In one or more examples, the machine learning model comprises one or more of: a large language model, LLM, and a visual language model, VLM.

In one or more examples, a large language model (LLM) may be seen as a type of artificial intelligence algorithm that uses deep learning techniques and large data sets to understand, summarize, generate and predict new content.

In one or more examples, a visual language model (VLM) may be seen as a type of large multimodal model that can learn from images and text.

In one or more examples, the processing of the sensor data comprises providing a model output based on a set of parameters.

In one or more examples, model output may be seen as the output of the machine learning model, for example, a set of processed sensor data with some or all PII removed.

In one or more examples, a set of parameters may be seen as a set of questions or commands configured to remove PII. For example, and as disclosed herein, a parameter or set of parameters could be used to remove the PII, and/or used to query a particular aspect from an image.

In one or more examples, the set of parameters is configured to at least partially remove personally identifiable information.

In other words, the method may comprise removing, based on the set of parameters, at least part of the PII when processing the sensor data using the ML model. The set of parameters may for example comprise a set of parameters determining the type and/or level of PII to remove from the sensor data using the ML model. It may be appreciated that the ML model may adjust or configure the removal of PII based on the set of parameters. In one or more example embodiments, the set of conditions may be based on a user that the model output is intended for and/or based on a user input provided by a user. In other words, the set of parameters may define a set of conditions for the ML model when processing the sensor data. For example, the set of parameters may configure the ML model to process the sensor data such that the model output provided by the ML model is in accordance with a command received by the electronic device and/or personalized in view of the user providing the command. In one or more example embodiments, the set of parameters may define a level or degree of removal of the PII.

In one or more examples, the processing the sensor data comprises processing 114A the sensor data for provision of a model output comprising embeddings indicative of environment information and/or textual data indicative of environment information.

In one or more examples, embeddings may be seen as representations of values or objects like text, images, and audio that are designed to be consumed by machine learning models. In one or more examples, embeddings may be seen as an intermediate format, for example, a format between the image data and the text data.

In one or more examples, the embeddings may be used as an intermediate format, which may enable rich information of the sensor data (for example, image data), while reducing or removing the privacy risks often present with image data. For example, the intermediate format (for example, embeddings) may not contain "facial data." In one or more examples, the intermediate format occupies less space than the image data. In one or more examples, the embeddings may be seen as an intermediate "language" of the LLM and/or an encrypted image.

In one or more examples, embeddings indicative of environment information may be seen as encrypted or unencrypted data that is in a machine learning accessible language that include information about a particular environment, for example, see the definition of environment information described herein.

In one or more examples, textual data indicative of environment information may be seen as environmental information captured in encrypted or unencrypted text format. In one or more examples, text format comprises rich text descriptions (for example, specific and/or general) of the captured sensor data (for example, frames or images from a camera) and is stored in a database together with time and place information. The storage of this text data may preserve statistical opportunities provided by large quantities of stored data (for example, big data database(s)), while removing the integrity and/or privacy risks, discussed herein.

In one or more examples, the embeddings comprise one or more multidimensional vectors.

In one or more examples, multidimensional vectors may be seen as vectors having a plurality of dimensions. In other words, the processing of the sensor data may comprise converting the sensor data, using the ML model, to a model output comprising one or more multidimensional vectors. For example, the model output may be seen as an intermediate format comprising one or more multidimensional vectors. An advantage of converting the sensor data to a model output comprising one or more multidimensional vectors may be that the format of the model output takes up less storage than the raw sensor data but may still allow the ML model to extract environmental data from the model output. Furthermore, the model output in a multidimensional vector format may not be indicative of PII for a user. In other words, only the ML model may be able to retrieve, such as decode, the model output for extracting environmental information. A multidimensional vector format may be seen as a multidimensional array comprising a collection of feature maps. The dimensions may be indicative of elements where a vector of each element may represent a different feature or aspect of the sensor data, such as different feature or aspect of the environmental data predicted based on the sensor data.

In one or more examples, the textual data is data following a data structure format.

In one or more examples, a data structure format may be seen as a specialized format for organizing, processing, retrieving and storing data. In one or more examples, the, a part, or all of the textual data may be stored in a JSON format, or a similar format. In one or more examples, the use of a data structure may allow for a more direct integration to the database, thereby permitting more complex database operations. A data structure format may be seen as a pre-defined format for the textual data so that the textual data is easier to process for the electronic device, e.g., when being prompted by a certain command. A data structure format may also be seen as a format that is quantifiable so that the electronic device may be able to provide answers to questions in a certain way where PII is removed.

In one or more examples, processing the sensor data comprises determining S114B one or more responses based on the set of parameters. In one or more examples, the model output comprises the one or more responses to the parameters. In other words, when the set of parameters comprise one or more questions provided via one or more user inputs for example, the processing of the sensor data may comprise determining one or more responses to the questions comprised in the set of parameters and including the responses in the outputted model output. For example, the one or more responses comprise a response to a question comprised in the set of parameters. For example, when processing the sensor data, the electronic device may be configured to provide one or more responses to one or more questions where the PII has been removed from the sensor data and/or the model output based on the set of parameters, e.g., based on the nature of the questions comprised in the set of parameters.

In one or more examples, the method 100 comprises outputting S116 the model output. The model output is associated with time information and/or location information. For example, the model output may comprise time information and/or location information.

In one or more examples, time information may be seen as information relative to a time, for example, a time at which the data was accessed and/or obtained by the electronic device, a time at which the data was collected by the sensor device, a time when the model output was generated and/or output. In one or more examples, the time information may include more than one time associated with the model output. For example, a model output could be associated with any number of times, as indicated above and/or as specified by a user or system administrator.

In one or more examples, location information may be seen information relative to a location, for example, a location from which the data was accessed and/or obtained by the electronic device, a location at which the data was collected by the sensor device, and/or another location associated with the data and/or the model output. In one or more examples, the time information may include more than one time associated with the model output. For example, a model output could be associated with any number of times, as indicated above and/or as specified by a user or system administrator.

In other words, converting sensor data (such as encoding the sensor data) may comprise converting sensor data associated with more than one time and/or one more location for provision of the model output, thereby improving the reliability and robustness of the model output.

In one or more examples, the method 100 comprises providing S118, in response to the first user input, a user input response based on the model output.

In one or more examples, a user input response may be seen as a response generated by the model (for example, from the electronic device running the model) that provides a response or "answer" to the input's query in the first user input. In one or more example embodiments, the method may comprise generating a user input response to the first user input based on the model output. For example, the user input response may be determined based on data, e.g., the model output, where at least some PII has been removed.

In one or more example embodiments, the method may comprise outputting the user input response in response to the first user input.

In one or more example embodiments, the model output comprises the user input response. In other words, the electronic device may be configured to determine the user input response when processing the sensor data for provision of the model output, e.g., simultaneously or sequentially with the processing of the sensor data.

In one or more examples, providing S118 the user response comprises, in response to the first user input, at least partially removing S118A the personally identifiable information. In one or more examples, at least partially removing the personally identifiable information comprises at least partially removing (S118A-1) the personally identifiable information is based on one or more previous model outputs.

In one or more examples, the at least partially removing the PII may be based on the data that is already stored in the database. For example, if sensor data collected differs (for example, based on a certain threshold of difference), from what is currently stored in the database, such as an object unique property (for example, color, printing, texture, or the like), that "unique" information can either be removed or converted to a less unique description.

For example, a text-to-data description may be generated as "A young man wearing pink jacket with the print "Andersson" on the back." The system, based on a comparison with previous model outputs and/or currently stored data in the database, may convert the text to "A person wearing a jacket" or just "A person". The determination of what the conversion should be exactly (including, for example, the level of detail to be removed), may be determined based on a comparison to other converted data (such as, embeddings) in the database.

In one or more examples, an end-user accessing the system, for example, using a user device such as user device 200 disclosed in Fig. 1 and/or Fig. 4, may provide a user input, such as a query "How many persons are in the room". The matched embeddings which may be returned (e.g., as model output and a response to the user), may provide an answer "5". These embeddings and thus this response may be considered not very unique and therefore no further processing is required before the response is returned to the user.

In one or more examples, a person accessing the system (as discussed above), may submit a command, "Find occasions where a person wearing a pink jacket with text on the back is sitting by a desk". The electronic device may identify a set of matched embeddings. The matched embeddings are identified as only a single person (for example, only a single instance), and are therefore considered very unique, especially relative to the embeddings currently stored in the database. Therefore, the electronic device may take the output and, remove some of the PII. For example, the provided user response may be returned to the user as "This information contains PII and has been filtered. Please ask general questions not targeting individuals." A response and filtering of this level may be suitable for a general user. In one or more examples, various levels of filtering may be used, for example, if the user has a separate credentialing, such as a security user. Thus, as described herein, the response may be filtered based on the input, which provides for customization of the system and device, to provide desired levels of PII and anonymity based on the particular setting, historical user and/or user.

In one or more examples, context may be an important factor in determining PII, for example, in some contexts, a person wearing a t-shirt may be very common, while in other contexts (for example, a formal office setting), a person wearing simply a t-shirt may be very unique. In this way, the granularity and specificity of the PII may be considered, which provides for a more robust solution.

In one or more examples, user input, such as a first user input, and parameters for the processing of the sensor data, could be formulated according to the below example.

"You will be shown an image from a camera with a fisheye lens. \

The lens is mounted in the ceiling pointing down. \

You will get a number of questions about details in the image. \

First a free text part where you explain why you came to your conclusions for each of the questions. \

Then a part where all the questions are answers in JSON format. \

The questions are: \
1) You should answer if the door is open or not with *Door open*: 'Yes' or 'Door open': 'No'. A hint if the door is open or not is if a small black sign on the door is visible or not. If it is visible the door is open. \
2) You should answer if there are text written on the whiteboard with 'Whiteboard written':
   'Yes' or 'Whiteboard written' : 'No' \
3) You should answer if there are people in the room or not with 'People in room': 'Yes' or 'People in room': 'No'. \
4) You should answer if cleaning is needed in the conference room or not with 'Cleaning needed': 'Yes' or 'Cleaning needed': 'No'. \
5) You should answer if there are any clothes in the room or not with 'Clothes': 'Yes' or 'Clothes': 'No'."

The answer could look like this:
### Free Text Explanation:
   1) **Door Status**: Observing the door in the image, the small black sign mentioned is not visible, suggesting that the door is closed. The absence of visible gaps between the door and its frame supports this conclusion.
   2) **Whiteboard Status**: The whiteboard appears to be clean and without any visible writing or markings from the provided perspective. Its surface seems unmarked, indicating that nothing is written on it.
   3) **Presence of People**: The room appears to be void of any people. There are no visible human forms or parts of people visible anywhere in the conference room.
   4) **Need for Cleaning**: The table in the conference room has some visible debris or residues which could be crumbs or small waste, suggesting that cleaning might be necessary. There are no other significant signs of untidiness or dirt visible.
   5) **Presence of Clothes**: No clothes are visible in the room. The conference room contains only furniture and typical office equipment.
### JSON Format Answers:

```
    ‴json
    {
     "Door open": "No",
     "Whiteboard written": "No",
     "People in room": "No",
     "Cleaning needed": "Yes",
     "Clothes": "No"
    }
```

In one or more examples, the method 100 comprises applying S120 a post-processing technique to the model output for removing personally identifiable information from the model output.

In one or more examples, a post-processing technique may be seen as a processing technique applied to the sensor data (for example, which may be converted to embeddings) following the processing by the machine learning model. In one or more examples, elements of PII may be removed at this point in the flow, in order to allow for further adaptability of the device and system to an end-user and/or system administrator's particular need. In other words, a post-processing technique may comprise to remove remaining PII of the model output.

In one or more examples, the post-processing technique comprises pruning S120A the model output.

In one or more examples, pruning the model output may be seen as removing some or most of the output before it is provided to a user. For example, the output of the model may be "A man with red hair in a white t-shirt". However, as discussed above, for various reasons, this may be considered too unique and/or therefore containing some PII. Thus, a post-processing technique, for example, pruning, may be applied and the output may be reduced to "A man", or "A man in a white t-shirt" or "A man with red hair" or "a person" or some other pruned version of the output.

In one or more examples, the method 100 comprises obtaining S122 a second user input indicative of a second command.

In one or more examples, a second command may be seen as a directive or query provided to the electronic device from a second user, or from a first user but a second command. In one or more examples, a second user input may be seen as any input, for example, a second command, or other input, provided to the electronic device. In one or more examples, the second user input may be received by the electronic device after the first user input. In one or more examples, the second user input may be a second command received from a first user. In one or more examples, the second user input may be a first command received from a second user. For example, the second user input may comprise a command or a request to obtain the original image that the model output is based on for security reasons.

In one or more examples, the method 100 comprises, in response to the second user input, determining S124 whether the second user input and/or the sensor data meets a second criterion. In one or more examples, the method 100 comprises determining S125 that the second user input and/or the sensor data does not meet the second criterion.

In one or more examples, the second criterion may be seen as a security criterion associated with the second user input, the user submitting the second user input, and/or the sensor data obtained. For example, the second criterion may comprise one or more conditions to be satisfied for the second user input to be addressed and/or for the sensor data to be processed, for example, in a case where there is security sensitive data in the sensor data. For example, the second criterion may comprise one or more thresholds for triggering the outputting of a model output in accordance with the second user input when the second user input requests security sensitive information and/or when the sensor data comprises security sensitive information. For example, when the second user input comprises a request or question that would require the outputting of sensitive PII in the model output, the second user input would have to satisfy the second criterion before the model output can be provided.

In one or more examples, the sensor data (for example, image data) may be stored only when there has been a safety or security incident impacting the particular location, such as a fire, a burglary, or another type of incident defined by the first criterion. In one or more examples, the second criterion may be specific to the particular user submitting the input, may be specific to the content or context of the input, and/or may be determined and associated with the second user input and/or the sensor data in some other way.

In one or more examples, the method 100 comprises outputting S126, in accordance with the second user input and/or the sensor data meeting the second criterion, the sensor data.

In one or more examples, the second user input may comprise a request to obtain the original image data (for example, the image itself), for security reasons. In one or more examples, a second criterion could be a security criterion, such as a security clearance of a user, a particular level of PII or other sensitive or security-relevant, or another security-related criterion. In one or more examples, the electronic device may determine the second user input and/or the sensor data does meet the second criterion (for example, a security-related criterion), and therefore, may provide the requested sensor data (for example, the image itself) as the user response and/or as a response to the user input. In one or more examples, the second user input and/or the sensor data meeting the second criterion may result in the outputting of the processes (for example, with some levels of PII removed) sensor data.

Fig. 4 shows a block diagram of an example sensor device 300 according to the disclosure. The sensor device 300 comprises memory circuitry 301, processor circuitry 302, and a wireless interface 303. The sensor device 300 may be configured collect, record, or in other way acquire sensor data, for example, sensor data described herein and at Figs. 3A-3C. In other words, the sensor device 300 may be configured to collect sensor data.

The sensor device 300 is configured to communicate with the electronic device, such as electronic device 400, using a wired or wireless communication system.

The sensor device 300 is configured to transmit (such as via the wireless interface 303) sensor data to the electronic device 300.

The operations of the sensor device 300 may be embodied in the form of executable logic routines (for example, lines of code, software programs, etc.) that are stored on a non-transitory computer readable medium (for example, memory circuitry 301) and are executed by processor circuitry 302).

Furthermore, the operations of the sensor device 300 may be considered a method that the sensor device 300 is configured to carry out. Also, while the described functions and operations may be implemented in software, such functionality may also be carried out via dedicated hardware or firmware, or some combination of hardware, firmware and/or software.

Memory circuitry 301 may be one or more of a buffer, a flash memory, a hard drive, a removable media, a volatile memory, a non-volatile memory, a random-access memory (RAM), or other suitable device. In a typical arrangement, memory circuitry 301 may include a non-volatile memory for long term data storage and a volatile memory that functions as system memory for processor circuitry 302. Memory circuitry 301 may exchange data with processor circuitry 302 over a data bus. Control lines and an address bus between memory circuitry 301 and processor circuitry 302 also may be present (not shown in Fig. 4). Memory circuitry 301 is considered a non-transitory computer readable medium.

Memory circuitry 301 may be configured to store information (such as information indicative of second set of paging resources) in a part of the memory.

Fig. 5 shows a block diagram of an example electronic device 400 according to the disclosure. The electronic device 400 comprises memory circuitry 401, processor circuitry 402, and an interface 403. The interface 403 may comprise a wired and/or a wireless interface. The electronic device 400 may be configured to perform any of the methods disclosed in Figs. 3A-3C. In other words, the electronic device 400 may be configured to obtain environmental data.

The electronic device 400 is configured to communicate with a sensor device and/or a user device, such as the sensor device and/or user device disclosed herein, using a wireless communication system and/or a wired communication system.

The electronic device 400 may be configured to transmit (such as via the interface 403) a user input response, for example, to a user device such as user device 200 of Fig. 1.

The electronic device 400 is configured to obtain, such as receive (such as via the interface 403), from a sensor device, such as sensor device 300 of Fig. 4, sensor data. In one or more examples, sensor device 300 may be communicatively or physically coupled to and/or be a part of electronic device 400.

The electronic device 400 is configured to process (such as using the processor circuitry 402) the sensor data by applying a machine learning model to the sensor data. The processing of the sensor data comprises providing a model output based on a set of parameters configured to at least partially remove personally identifiable information. In one or more example embodiments, the electronic device 400, such as the processor circuitry 402, comprises a machine learning circuitry 402A configured to operate according to the machine learning model.

The electronic device 400 is configured to output (such as using the processor circuitry 402 and/or via the interface 403) the model output. The model output is associated with time information and/or location information.

The electronic device 400 is optionally configured to perform any of the operations disclosed in Figs. 3A-3C (such as any one or more of S102, S104, S106, S106A, S108, S110, S111, S112, S114, S114A, S114B, S116, S118, S118A, S118A-1, S120, S120A, S122, S122A, S124, S125, S126). The operations of the electronic device 400 may be embodied in the form of executable logic routines (for example, lines of code, software programs, etc.) that are stored on a non-transitory computer readable medium (for example, memory circuitry 401) and are executed by processor circuitry 402).

Furthermore, the operations of the electronic device 400 may be considered a method that the electronic device 400 is configured to carry out. Also, while the described functions and operations may be implemented in software, such functionality may also be carried out via dedicated hardware or firmware, or some combination of hardware, firmware and/or software. Memory circuitry 401 may be one or more of a buffer, a flash memory, a hard drive, a removable media, a volatile memory, a non-volatile memory, a random-access memory (RAM), or other suitable device. In a typical arrangement, memory circuitry 401 may include a non-volatile memory for long term data storage and a volatile memory that functions as system memory for processor circuitry 402. Memory circuitry 401 may exchange data with processor circuitry 402 over a data bus. Control lines and an address bus between memory circuitry 401 and processor circuitry 402 also may be present (not shown in Fig. 5). Memory circuitry 401 is considered a non-transitory computer readable medium.

Memory circuitry 401 may be configured to store information (such as information indicative of second set of paging resources) in a part of the memory.

It may be appreciated that any of the definitions and terms used in the description of Figs. 3A-3C may also apply to the description of Fig. 1, Fig. 2, Fig. 4, and Fig. 5 and vice versa. For example, any definitions and terms associated with the method performed by the electronic device as disclosed herein may also apply and/or be used to the definitions and terms relating to the system, and the electronic device disclosed herein and vice versa.

Examples of methods and products (electronic device and system) according to the disclosure are set out in the following items:
Item 1. A method, performed by an electronic device, for obtaining environment information, the method comprising:
   - obtaining (S102), from a sensor device, sensor data indicative of an environment;
   - processing (S114) the sensor data by applying a machine learning model to the sensor data, wherein the processing of the sensor data comprises providing a model output based on a set of parameters configured to at least partially remove personally identifiable information; and
   - outputting (S116) the model output, wherein the model output is associated with time information and/or location information.
Item 2. The method according to item 1, wherein the machine learning model comprises one or more of: a large language model, LLM, and a visual language model, VLM.
Item 3. The method according to any of the previous items, wherein processing (S114) the sensor data comprises processing (S114A) the sensor data for provision of a model output comprising embeddings indicative of environment information and/or textual data indicative of environment information.
Item 4. The method according to any of the previous items, wherein the method comprises encoding (S104) the sensor data for provision of the embedded data.
Item 5. The method according to any of items 3-4, wherein the embeddings comprise one or more multidimensional vectors.
Item 6. The method according to any of items 3-5, wherein the textual data is data following a data structure format.
Item 7. The method according to any of the previous items, wherein processing (S114) the sensor data comprises determining (S114B) one or more responses based on the set of parameters, wherein the model output comprises the one or more responses to the parameters.
Item 8. The method according to any of the previous items, wherein the method comprises obtaining (S106) a first user input indicative of a first command.
Item 9. The method according to item 8, wherein the method comprises providing (S118), in response to the first user input, a user input response based on the model output.
Item 10. The method according to item 9, wherein providing (S118) the user response comprises, in response to the first user input, at least partially removing (S118A) the personally identifiable information.
Item 11. The method according to item 10, wherein at least partially removing the personally identifiable information comprises at least partially removing (S118A-1), based on one or more previous model outputs, the personally identifiable information.
Item 12. The method according to any of the previous items, wherein the method comprises determining (S110) whether the sensor data meets a first criterion.
Item 13. The method according to item 12, wherein the method comprises, in accordance with the sensor data meeting the first criterion, triggering (S112) the processing of the sensor data.
Item 14. The method according to any of the previous items, wherein the method comprises applying (S108) a pre-processing technique to the sensor data for removing personally identifiable information from the sensor data before the processing of the sensor data.
Item 15. The method according to any of the previous items, wherein the method comprises applying (S120) a post-processing technique to the model output for removing personally identifiable information from the model output.
Item 16. The method according to item 15, wherein the post-processing technique comprises pruning (S120A) the model output.
Item 17. The method according to any of the previous items, wherein the method comprises obtaining (S122) a second user input indicative of a second command.
Item 18. The method according to item 17, wherein the method comprises, in response to the second user input, determining (S124) whether the second user input and/or the sensor data meets a second criterion.
Item 19. The method according to item 18, wherein the method comprises outputting (S126), in accordance with the second user input and/or the sensor data meeting the second criterion, the sensor data.
Item 20. The method according to any of items 8-19, wherein the method comprises obtaining (S106A) the first user input and/or obtaining (S122A) second user input from a user device.
Item 21. The method according to any of the previous items, wherein the sensor device is a camera configured to obtain sensor data indicative of the environment.
Item 22. An electronic device comprising memory circuitry, processor circuitry, and an interface, wherein the electronic device is configured to:
   obtain, from a sensor device, sensor data indicative of an environment;
   process the sensor data by applying a machine learning model to the sensor data, wherein the processing of the sensor data comprises providing a model output based on a set of parameters configured to at least partially remove personally identifiable information; and
   output the model output, wherein the model output is associated with time information and/or location information.
Item 23. The electronic device according to item 22, wherein the machine learning model comprises one or more of: a large language model, LLM, and a visual language model, VLM.
Item 24. The electronic device according to any of items 22-23, wherein processing the sensor data comprises processing the sensor data for provision of a model output comprising embeddings indicative of environment information and/or textual data indicative of environment information.
Item 25. The electronic device according to any of items 22-24, wherein the electronic device is configured to encode the sensor data for provision of the embeddings.
Item 26. The electronic device according to item 24-25, wherein the embeddings comprise one or more multidimensional vectors.
Item 27. The electronic device according to any of items 24-26, wherein the textual data is data following a data structure format.
Item 28. The electronic device according to any of items 22-27, wherein processing the sensor data comprises determining one or more responses based on the set of parameters, wherein the model output comprises the one or more responses to the parameters.
Item 29. The electronic device according to any of items 22-28, wherein the electronic device is configured to obtain a first user input indicative of a first command.
Item 30. The electronic device according to item 29, wherein the electronic device is configured to provide, in response to the first user input, a user input response based on the model output.
Item 31. The electronic device according to item 30, wherein providing the user response comprises, in response to the first user input, at least partially removing the personally identifiable information.
Item 32. The electronic device according to item 31, wherein at least partially removing the personally identifiable information comprises at least partially removing, based on one or more previous model outputs, the personally identifiable information.
Item 33. The electronic device according to any of items 22-32, wherein the electronic device is configured to determine whether the sensor data meets a first criterion.
Item 34. The electronic device according to item 33, wherein the electronic device is configured to, in accordance with the sensor data meeting the first criterion, trigger the processing of the sensor data.
Item 35. The electronic device according to any of items 22-34, wherein the electronic device is configured to apply a pre-processing technique to the sensor data for removing personally identifiable information from the sensor data before the processing of the sensor data.
Item 36. The electronic device according to any of items 22-35, wherein the electronic device is configured to apply a post-processing technique to the model output for removing personally identifiable information from the model output.
Item 37. The electronic device according to item 36, wherein the post-processing technique comprises pruning the model output.
Item 38. The electronic device according to any of items 22-37, wherein the electronic device is configured to obtain a second user input indicative of a second command.
Item 39. The electronic device according to item 38, wherein the electronic device is configured to, in response to the second user input, determine whether the second user input and/or the sensor data meets a second criterion.
Item 40. The electronic device according to item 39, wherein the electronic device is configured to output, in accordance with the second user input and/or the sensor data meeting the second criterion, the sensor data.
Item 41. The electronic device according to any of items 29-40, wherein the electronic device is configured to obtain the first user input and/or second user input from a user device.
Item 42. The electronic device according to any of items 22-41, wherein the sensor device is a camera configured to obtain sensor data indicative of the environment.
Item 43. The electronic device according to any of items 22-42, wherein the electronic device comprises the sensor device.
Item 44. The electronic device according to any of items 22-42, wherein the electronic device is an edge electronic device.
Item 45. The electronic device according to any of items 22-42, wherein the electronic device is a server device.
Item 46. A system comprising an electronic device and a sensor device, wherein the system is configured to:
   obtain, from the sensor device, sensor data indicative of an environment;
   process the sensor data by applying a machine learning model to the sensor data, wherein the processing of the sensor data comprises providing a model output based on a set of parameters configured to at least partially remove personally identifiable information; and
   output the model output, wherein the model output is associated with time information and/or location information.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another.

Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figures 1-6 comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware. Language of degree used herein, such as the terms "approximately," "about," "generally," and "substantially" as used herein represent a value, amount, or characteristic close to the stated value, amount, or characteristic that still performs a desired function or achieves a desired result.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A method, performed by an electronic device, for obtaining environment information, the method comprising:
- obtaining (S102), from a sensor device, sensor data indicative of an environment;
- processing (S114) the sensor data by applying a machine learning model to the sensor data, wherein the processing of the sensor data comprises providing a model output based on a set of parameters configured to at least partially remove personally identifiable information; and
- outputting (S116) the model output, wherein the model output is associated with time information and/or location information.

2. The method according to claim 1, wherein the machine learning model comprises one or more of: a large language model, LLM, and a visual language model, VLM.

3. The method according to any of the previous claims, wherein processing (S114) the sensor data comprises processing (S114A) the sensor data for provision of a model output comprising embeddings indicative of environment information and/or textual data indicative of environment information.

4. The method according to any of the previous claims, wherein the method (100) comprises encoding (S104) the sensor data for provision of the embedded data.

5. The method according to any of claims 3-4, wherein the embeddings comprise one or more multidimensional vectors.

6. The method according to any of claims 3-5, wherein the textual data is data following a data structure format.

7. The method according to any of the previous claims, wherein processing (S114) the sensor data comprises determining (S114B) one or more responses based on the set of parameters, wherein the model output comprises the one or more responses to the parameters.

8. The method according to any of the previous claims, wherein the method (100) comprises obtaining (S106) a first user input indicative of a first command.

9. The method according to claim 8, wherein the method (100) comprises providing (S118), in response to the first user input, a user input response based on the model output.

10. The method according to claim 9, wherein providing (S118) the user response comprises, in response to the first user input, at least partially removing (S118A) the personally identifiable information.

11. The method according to claim 10, wherein at least partially removing the personally identifiable information comprises at least partially removing (S118A-1), based on one or more previous model outputs, the personally identifiable information.

12. The method according to any of the previous claims, wherein the method comprises determining (S110) whether the sensor data meets a first criterion.

13. The method according to claim 12, wherein the method comprises, in accordance with the sensor data meeting the first criterion, triggering (S112) the processing of the sensor data.

14. The method according to any of the previous claims, wherein the method comprises applying (S108) a pre-processing technique to the sensor data for removing personally identifiable information from the sensor data before the processing of the sensor data.

15. An electronic device comprising memory circuitry, processor circuitry, and an interface, wherein the electronic device is configured to:
obtain, from a sensor device, sensor data indicative of an environment;
process the sensor data by applying a machine learning model to the sensor data, wherein the processing of the sensor data comprises providing a model output based on a set of parameters configured to at least partially remove personally identifiable information; and
output the model output, wherein the model output is associated with time information and/or location information.
